Europäisches Patentamt

European Patent Office

Office européen des brevets

(19)

(11) Veröffentlichungsnummer: **0 289 629 B1**

(12) **EUROPÄISCHE PATENTSCHRIFT**

(45) Veröffentlichungstag der Patentschrift: **18.09.91**

(51) Int. Cl.⁵: **G06F 15/332**

(21) Anmeldenummer: **87106348.3**

(22) Anmeldetag: **02.05.87**

(54) Verfahren zur zweidimensionalen Spektraltransformation.

(43) Veröffentlichungstag der Anmeldung:
**09.11.88 Patentblatt 88/45**

(45) Bekanntmachung des Hinweises auf die
Patenterteilung:
**18.09.91 Patentblatt 91/38**

(84) Benannte Vertragsstaaten:
**DE FR GB IT NL**

(56) Entgegenhaltungen:
**EP-A- 0 013 069**
**GB-A- 2 141 847**

**PHILIPS TECH. REV., Band 38, Nr. 4/5,
1978/1979, Seiten 119-130; H. BACCHI et al.:
"Realtime orthogonal transformation of
colour-television pictures"**

(73) Patentinhaber: **ANT Nachrichtentechnik GmbH
Gerberstrasse 33
W-7150 Backnang(DE)**

(72) Erfinder: **Singer, Rolf, Dipl.-Ing.
Elly-Heuss-Knapp-Weg 19
W-7150 Backnang(DE)**

## Beschreibung

Die vorliegende Erfindung betrifft ein Verfahren zur zweidimensionalen Spektraltransformation eines Datensatzes, bei dem die zu transformierenden Daten aus dem Originalbereich in einen ersten Speicher eingeschrieben werden und durch zwei Matrizenmultiplikationen zwischen der in den ersten Speicher aufgenommenen Datenmatrix und einer Transformationsmatrix die einzelnen Daten aus dem Originalbereich in Koeffizienten des Spektralbereichs transformiert werden, wobei die aus der ersten Matrizenmultiplikation hervorgehende Matrix in einem eigenen Speicher abgelegt wird und beide Matrizenmultiplikationen mit derselben Recheneinrichtung ausgeführt werden.

Zweidimensionale Spektraltransformation, z. B. die diskrete Fourier-, die diskrete Cosinus-, die Walsh-Hadamard-, die Haar, die Slant-Transformation etc., sind theoretisch beschrieben in dem Buch von N. Ahamed, K. R. Rao "Orthogonal Transforms for Digital Signal Processing", Springer Verlag Berlin, Heidelberg, New York, 1975.

Ein wichtiger Anwendungsbereich solcher Spektraltransformationen ist die Datenkompression mit dem Ziel, die Zeit für die Übertragung einer Datenmenge über eine Nachrichtenübertragungsstrecke zu reduzieren.

Große Datenmengen, die eine lange Übertragungszeit erfordern, fallen z. B. an bei der Digitalisierung von Fernsehbildern. Hierbei wirkt sich eine Spektraltransformation der Bilddaten vorteilhaft auf eine Übertragungszeitverkürzung aus.

Ein einleitend wiedergegebenes Verfahren zur zweidimensionalen Spektraltransformation ist aus PHILIPS TECH. REV., Band 38, Nr. 4/5, 1978/1979, Seiten 119 - 130; H. BACCHI et al.: "Realtime orthogonal transformation of colour-television pictures" bekannt.

Bei diesem bekannten Verfahren entsteht aus der Datenmatrix im Originalbereich eine Koeffizientenmatrix im Spektralbereich, indem zunächst die Datenmatrix mit der Transformationsmatrix multipliziert und dann die daraus hervorgehende Matrix transponiert mit der Transformationsmatrix multipliziert wird. Eine in dem Dokument angegebene Schaltung, welche diese Transformation vom Original- in den Spektralbereich ausführt, kann auch zur Rücktransformation vom Spektral- in den Originalbereich herangezogen werden. Allerdings erfordert die Transformationsumkehr eine andere Aussteuerung mehrerer Schaltungseinheiten.

Der Erfindung liegt die Aufgabe zugrunde, ein Verfahren der eingangs genannten Art anzugeben, dessen Ausführung mit einer Schaltung möglich ist, mit der ebenfalls die Rücktransformation vom Spektral- in den Originalbereich ausgeführt werden kann und dazu möglichst wenige Schaltungsteile anders angesteuert werden müssen als bei der Transformation vom Original- in den Spektralbereich.

Diese Aufgabe wird durch die Merkmale des Patentanspruchs 1 gelöst.

Zweckmäßige Weiterbildungen des erfundenen Verfahrens gehen aus den Unteransprüchen hervor.

Aus der GB-A-2 141 847 geht hervor, daß eine Matrixmultiplikation mit mehreren Multiplizierern parallel ausgeführt werden kann.

WO 88/07725 ist Stand der Technik im Sinne des Artikels 54(3) EPÜ. Es offenbart ein Verfahren zur zweidimensionalen Spektraltransformation, das sich vom Gegenstand des Anspruchs 1 dadurch unterscheidet, daß es das letzte kennzeichnende Merkmal dieses Anspruchs nicht beschreibt.

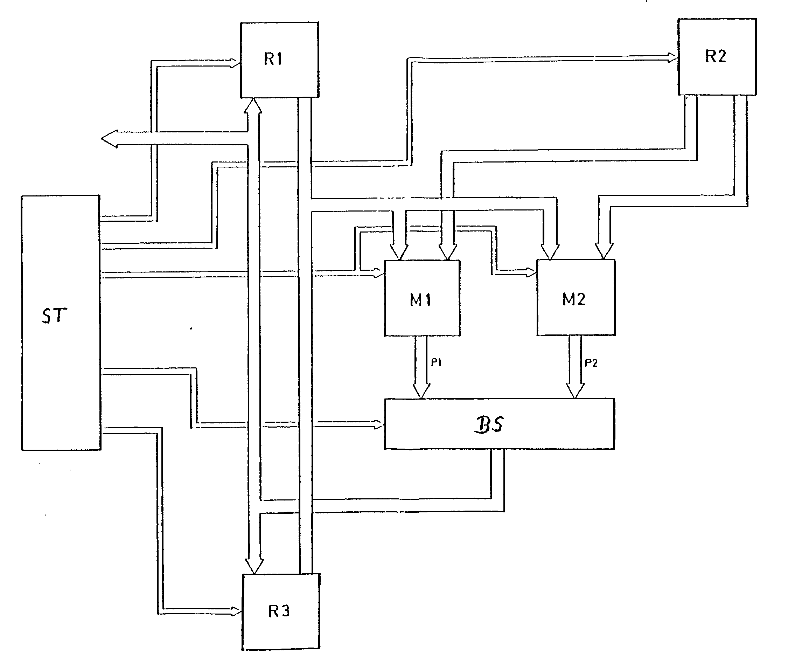

Anhand eines in der Zeichnung dargestellten Ausführungsbeispiels wird nachfolgend die Erfindung näher erläutert.

Die Figur zeigt ein schematisches Diagramm aus Funktionsblöcken, das den Verfahrensablauf für eine Transformation eines Datensatzes aus dem Zeitbereich in den Spektralbereich bzw. umgekehrt verdeutlichen soll.

Zu Beginn des Verfahrens wird in einen ersten Speicher R1 eine Matrix [X] eingeschrieben, deren Elemente digitale Daten, z. B. Luminanz- oder Chrominanzsignale der einzelnen Bildpunkte eines Bildes bzw. Bildausschnittes sind. In einem zweiten Speicher R2 sind bereits die Elemente einer Transformationsmatrix [A] abgespeichert. Nun wird Mit Hilfe von Multiplizier- und Addiereinrichtungen M1, M2 eine Multiplikation der Transformationsmatrix [A] mit der transponierten Datenmatrix $[X]^T$ durchgeführt und die daraus resultierende Matrix [Z] = [A] • $[X]^T$ in einen dritten Speicher R3 eingeschrieben. Dabei werden mit den in dem dargestellten Ausführungsbeispiel zwei vorhandenen Multiplizier- und Addiereinrichtungen M1 und M2 jeweils parallel zwei Zeilenvektoren der Transformationsmatrix mit allen Zeilenvektoren der Datenmatrix [X] multipliziert. Z. B. führt die Multiplizier- und Addiereinrichtung M1 die Multiplikation der Transformations-Zeilenvektoren mit geradzahligem Zeilenindex und die andere Multiplizier- und Addiereinrichtung M2 die Multiplikationen der Transformations-Zeilenvektoren mit ungeradzahligem Zeilenindex mit den Daten-Zeilenvektoren durch. Mit mehr als zwei Multiplizier- und Addiereinrichtungen können natürlich entsprechend mehr Zeilenvektoren der Transformationsmatrix [A] parallel mit den Zeilenvektoren der Datenmatrix [X] multipliziert werden, wodurch die Matrizenmultiplikation weiter beschleunigt wird. Dafür ist es zweckmäßig den zweiten Speicher R2 derart in mehrere Speicherelemente aufzuteilen, daß jeder Multiplizier- und Addiereinrichtung M1, M2 ein solches Speicherelement des Speichers R2 zugeordnet ist, wobei in jedes der Speicherelemente soviele Zeilen bzw. Spaltenvektoren der Transformationsmatrix eingeschrieben werden wie die jeweils zugehörige Multiplizier- und Addiereinrichtung M1, M2 für die Matrizenmultiplikation benötigt.

In der Figur deuten die breiten Pfade Leitungen für die Matrizensignale an, und die schmalen Pfade sind Leitungen für die von einer Steuerung ST ausgehenden und den Verfahrensablauf in den Schaltungseinheiten bestimmenden Steuersignale.

Die interne Bitwortlänge der Multiplizier- und Addiereinrichtungen M1, M2 ist länger als die interne Bitwortlänge der Speicher R1, R2, R3, um Vektormultiplikationen ohne Rundungsfehler zu ermöglichen. Z.B. beträgt die Bitwortlänge der Matrizenelemente in den Speichern R1, R2, R3 12 Bit, und die aus den Vektormultiplikationen in den Multiplizer- und Addiereinrichtungen hervorgehenden Ergebnisse weisen eine Wortlänge von z.B. 27 Bit auf. Die Vektormultiplikationsergebnisse werden in einem den Multiplizier-Addiereinrichtungen M1, M2 nachgeschalteten Schaltungsteil BS von der großen Bitwortlänge (27 Bit) auf die kürzere Bitwortlänge (12 Bit), für die die Speicher ausgelegt sind, reduziert. Der Schaltungsteil BS ist so ausgelegt, daß er durch extern anzulegende statische Signale dem jeweiligen, von der Transformationsmatrix abhängigen, notwendigen Dynamikumfang für jede Matrizenmultiplikation separat angepaßt werden kann. Dadurch kann der unvermeidbare Rechenfehler der Schaltung weitgehend reduziert werden.

Kann der dritte Speicher R3 in einem Zeitpunkt jeweils nur ein Vektormultiplikationsergebnis aufnehmen, so müßte entweder das Schaltungsteil BS andere zur gleichen Zeit entstandene Ergebnisse zwischenspeichern und sie nacheinander um jeweils einen Takt versetzt an den dritten Speicher R3 weiterreichen. Oder wenn man auf eine Zwischenspeicherung verzichten will, müßten die Vektormultiplikationen in den einzelnen Multiplizier- und Addiereinrichtungen um jeweils einen Takt versetzt gestartet werden, so daß die Multiplikationsergebnisse auch gegeneinander taktversetzt zur Übernahme in den dritten Speicher R3 bereitstehen.

Nachdem die beschriebene erste Matrizenmultiplikation beendet und die daraus resultierende Matrix [Z] in den dritten Speicher R3 eingeschrieben ist, wird nach dem gleichen Verfahren wie bei der ersten Matrizenmultiplikation nun in einer zweiten Matrizenmultiplikation die Transformationsmatrix [A] aus dem zweiten Speicher R2 mit der transponierten Matrix $[Z]^T$ aus dem dritten Speicher R3 multipliziert

$$[Y] = [A] \bullet [Z]^T$$
$$[Y] = [A] \bullet [[A] \bullet [X]^T]^T$$
$$[Y] = [A] \bullet [X] \bullet [A]^T$$

und die Ergebnismatrix [Y], deren Elemente die Spektralkoeffizienten der Transformation sind, in den ersten Speicher R1 eingeschrieben.

In gleicher Weise ist mit den vorhandenen Speichern R1, R2, R3 und den Multiplizier- und Addiereinrichtungen M1, M2 auch eine inverse Transformation durchführbar, d.h. es werden Koeffizienten aus dem Spektralbereich zurücktransformiert in Daten im Originalbereich. In diesem Fall wird die Koeffizientenmatrix in den ersten Speicher R1 eingeschrieben und dann eine in dem zweiten Speicher R2 vorliegende inverse Transformationsmatrix mit Hilfe der Multiplizier- und Addiereinrichtungen mit der R1 transponierten Koeffizientenmatrix aus dem ersten Speicher R1 multipliziert. Die inverse Transformationsmatrix im zweiten Speicher R2 kann auf einfache Weise durch Transponieren der Transformationsmatrix selbst gewonnen werden, wenn sie wie hier orthonormal ist. Denn die Inverse einer orthonormalen Matrix ist gleich der Transponierten dieser Matrix. Da man die transponierte Transformationsmatrix lediglich durch Vertauschen der Zeilenvektoren mit den Spaltenvektoren der im zweiten Speicher R2 vorhandenen Transformationsmatrix erhält, muß nur mit entsprechend geänderter Adressierung auf die Elemente zweiten Speicher R2 zugegriffen werden. Darauf wird die aus der vorangegangenen Matrizenmultiplikation resultierende Matrix in den dritten Speicher R3 eingeschrieben und anschließend die inverse Transformationsmatrix aus dem zweiten Speicher mit Hilfe der vorhandenen Multiplizier- und Addiereinrichtungen mit der transponierten Matrix aus dem Dritten Speicher R3 multipliziert, woraus eine Matrix hervorgeht, deren Elemente die Daten im Originalbereich sind.

Die Funktionsfähigkeit einer Schaltungsanordnung, die sowohl eine Transformation vom Originalbereich in den Spektralbereich als auch die inverse Transformation dazu nach dem dargelegten Verfahren ausüben kann, ist auf folgende Weise überprüfbar:

Zunächst werden Daten aus dem Originalbereich einer Spektraltransformation unterzogen und dann die aus dieser Transformation hervorgehenden Spektralkoeffizienten wieder rücktransformiert, wobei bei Übereinstimmung der aus der Rücktransformation hervorgehenden Daten mit den ursprünglichen Daten auf ein fehlerfreies Funktionieren der Schaltungsanordnung geschlossen werden kann. Eine Abweichung der aus der Rücktransformation resultierenden Daten von den ursprünglichen Daten weist auf einen fehlerhaften Betrieb hin.

## Patentansprüche

1. Verfahren zur zweidimensionalen Spektraltransformation eines Datensatzes, bei dem die zu transformierenden Daten aus dem Originalbereich in einen ersten Speicher (R1) eingeschrieben werden, und durch zwei Matrizenmultiplikationen zwischen der in den ersten Speicher (R1) aufgenommenen Datenmatrix und einer Transformationsmatrix die einzelnen Daten aus dem Originalbereich in Koeffizienten des Spektralbereichs transformiert werden, wobei die aus der ersten Matrizenmultiplikation hervorgehende Matrix in einem eigenen Speicher (R3) abgelegt wird und beide Matrizenmultiplikationen mit derselben Recheneinrichtung ausgeführt werden, dadurch gekennzeichnet, daß die in einem zweiten Speicher (R2) vorliegende Transformationsmatrix mit der transponierten Datenmatrix aus dem ersten Speicher (R1) multipliziert wird, daß darauf die Transformationsmatrix mit der transponierten Matrix, welche aus der ersten Matrizenmultiplikation hervorgegangen ist und im dritten Speicher (R3) abgelegt ist, multipliziert wird und daß die aus dieser zweiten Matrizenmultiplikation hervorgehende Spektralkoeffizientenmatrix in den ersten Speicher (R1) eingeschrieben wird.

2. Verfahren nach Anspruch 1, dadurch gekennzeichnet, daß die Multiplikation zweier Matrizen so durchgeführt wird, daß von allen Zeilenvektoren der ersten Matrix jeweils mindestens zwei Zeilenvektoren parallel in getrennten Multiplizier- und Addiereinrichtungen (M1, M2) mit den Spaltenvektoren der zweiten Matrix multipliziert werden.

3. Verfahren nach Anspruch 1 oder 2, gekennzeichnet durch seine Anwendung zur Rücktransformation von Koeffizienten des Spektralbereichs in Daten im Originalbereich, indem die rückzutransformierenden Spektralkoeffizienten als Elemente einer Matrix in den ersten Speicher (R1) eingeschrieben werden, daß dann eine in dem zweiten Speicher (R2) vorliegende inverse Transformationsmatrix mit Hilfe der Multiplizier- und Addiereinrichtungen (M1, M2) mit der in den ersten Speicher aufgenommenen, transponierten Koeffizientenmatrix multipliziert wird, daß darauf die aus der vorangegangenen Matrizenmultiplikation resultierende Matrix in den dritten Speicher (R3) eingeschrieben wird und daß anschließend die inverse Transformationsmatrix aus dem zweiten Speicher (R2) mit Hilfe der vorhandenen Multiplizier-und Addiereinrichtungen (M1, M2) mit der transponierten Matrix aus dem dritten Speicher (R3) multipliziert wird, woraus eine Matrix hervorgeht, deren Elemente die Daten im Originalbereich sind.

4. Verfahren nach den Ansprüchen 1 und 3, dadurch gekennzeichnet, daß zunächst Daten aus dem Originalbereich einer Spektraltransformation unterzogen werden und dann die aus dieser Transformation hervorgehenden Spektralkoeffizienten wieder rücktransformiert werden, wobei die Übereinstimmung der aus der Rücktransformation hervorgehenden Daten mit den ursprünglichen Daten auf ein fehlerfreies Funktionieren einer die Transformation und die Rücktransformation ausübenden Einrichtung geschlossen und bei Abweichung der aus der Rücktransformation resultierenden Daten von den ursprünglichen Daten auf fehlerhaften Betrieb der Einrichtung geschlossen werden kann.

5. Verfahren nach Anspruch 1, dadurch gekennzeichnet, daß der zweite Speicher (R2) derart in mehrere Speicherelemente aufgeteilt ist, daß jeder Multiplizier- und Addiereinrichtung (M1, M2) ein solches Speicherelement zugeordnet ist, wobei in jedes der Speicherelemente soviele Zeilen- bzw. Spaltenvektoren der Transformationsmatrix eingeschrieben werden wie die jeweils zugehörige Multiplizier- und Addiereinrichtung (M1, M2) für die Matrizenmultiplikation benötigt.

## Claims

1. Method for the two-dimensional spectral transformation of a data set, in which method the data to be transformed out of the original range are entered into a first store (R1) and the individual data are transformed out of the original range into co-efficients of the spectral range by two matrix multiplications between the data matrix received in the first store (R1) and a transformation matrix, wherein the matrix arising from the first matrix multiplication is filed in its own store (R3) and both matrix multiplications are performed with the same computing equipment, characterised thereby, that the transformation matrix present in a second store (R2) is multiplied by the transposed data matrix from the first store (R1) that the transformation matrix is thereupon multiplied by the transposed matrix which has arisen from the first matrix multiplication and is filed in a third store (R3) and that the spectral coefficient matrix arising from this second matrix multiplication is entered into the first store (R1).

2. Method according to claim 1, characterised thereby, that the multiplication of two matrices is so performed that at least two row vectors of all row vectors of the first matrix are multiplied each time parallelly with the column vectors of the second matrix in separate multiplying and adding equipments (M1, M2).

3. Method according to claim 1 or 2, characterised by its application for the reverse transformation of co-efficients of the spectral range into data in the original range in that the spectral co-efficients to be transformed back are entered as elements of a matrix into the first store (R1), that an inverse transformation matrix present in the second store (R2) is then multiplied with the aid of the multiplying and adding equipments (M1, M2) by the transposed co-efficient matrix received in the first store, that the matrix resulting from the preceding matrix multiplication is thereupon entered into the third store (R3) and that the inverse transformation matrix out of the second store (R2) is subsequently multiplied with the aid of the multiplying and adding equipments (M1, M2), that are present, by the transposed matrix out of the third store (R3), from which a matrix arises, the elements of which are the data in the original range.

4. Method according to the claims 1 and 3, characterised thereby, that data out of the original range are initially subjected to a spectral transformation and the spectral co-efficients arising from this transformation are then transformed back again, wherein the agreement of the data arising from the reverse transformation with the original data permits a faultless functioning of an equipment performing the transformation and the reverse transformation to be inferred and a faulty operation of the equipment to be inferred in the case of deviation of the data, which result from the reverse transformation, from the original data.

5. Method according to claim 1, characterised thereby, that the second store (R2) is divided up into several storage elements in such a manner that such a storage element is associated with each multiplying and adding equipment (M1, M2), wherein as many row or column vectors of the transformation matrix are entered into each of the storage elements as the respectively associated multiplying and adding equipment (M1, M2) needs for the matrix multiplication.

**Revendications**

1. Procédé de transformation spectrale bidimensionnelle d'un ensemble de données, dans lequel les données à transformer provenant du domaine original sont inscrites dans une première mémoire (R1) et, par deux multiplications matricielles entre la matrice de données reçue dans la première mémoire (R1) et une matrice de transformation, les données individuelles du domaine original sont transformées en coefficients du domaine spectral, la matrice provenant de la première multiplication matricielle étant déposée dans une mémoire propre (R3) et les deux multiplications matricielles étant exécutées avec le même dispositif de calcul, caractérisé par le fait que la matrice de transformation présente dans une deuxième mémoire (R2) est multipliée par la matrice de données transposée venant de la première mémoire (R1), par le fait que la matrice de transformation est alors multipliée par la matrice transposée qui est tirée de la première multiplication matricielle et est déposée dans la troisième mémoire (R3), et par le fait que la matrice de coefficients spectraux tirée de cette deuxième multiplication matricielle est inscrite dans la première mémoire (R1).

2. Procédé selon revendication 1, caractérisé par le fait que la multiplication de deux matrices est exécutée de manière que, de tous les vecteurs lignes de la première matrice, à chaque fois au moins deux vecteurs lignes sont multipliés en parallèle, dans des dispositifs multiplicateurs et additionneurs (M1, M2), par les vecteurs colonnes de la deuxième matrice.

3. Procédé selon revendication 1 ou 2, caractérisé par son emploi pour la transformation inverse de coefficients du domaine spectral en données dans le domaine original, les coefficients spectraux à rétrotransformer étant inscrits en tant qu'éléments d'une matrice dans la première mémoire (R1), par le fait qu'une matrice de transformation inverse présente dans la deuxième mémoire (R2) est multipliée, à l'aide des dispositifs multiplicateurs et additionneurs (M1, M2), par la matrice transposée de coefficients reçue dans la première mémoire, par le fait que la matrice résultant de la multiplication matricielle précédente est alors inscrite dans la troisième mémoire (R3) et par le fait que la matrice de transformation inverse tirée de la deuxième mémoire (R2) est ensuite multipliée, à l'aide des dispositifs multiplicateurs et additionneurs présents (M1, M2), par la matrice transposée tirée de la troisième mémoire (R3), ce dont il résulte une matrice dont les éléments sont les données dans le domaine original.

4.  Procédé selon les revendications 1 et 3, caractérisé par le fait que des données du domaine original sont d'abord soumises à une transformation spectrale puis les coefficients spectraux tirés de cette transformation sont rétrotransformés, la conformité entre les données tirées de la rétrotransformation et les données initiales permettant de conclure à un fonctionnement sans défaut d'un dispositif exécutant la transformation et la rétrotransformation, alors qu'en cas d'écart entre les données résultant de la rétrotransformation et les données initiales, on peut conclure à un fonctionnement défectueux du dispositif.

5.  Procédé selon revendication 1, caractérisé par le fait que la deuxième mémoire (R2) est partagée en plusieurs éléments de mémoire de manière qu'un tel élément de mémoire soit conjugué à chaque dispositif multiplicateur et additionneur (M1, M2), des vecteurs lignes et, selon le cas, des vecteurs colonnes de la matrice de transformation étant inscrits dans chacun des éléments de mémoire, en nombre aussi grand qu'il le faut à chaque fois par le dispositif multiplicateur et additionneur respectif (M1, M2) pour la multiplication matricielle.